# EUROPEAN PATENT SPECIFICATION

(11) **EP 4 299 269 B1**
(45) Date of publication and mention of the grant of the patent: **29.10.2025**
(21) Application number: 22181631.7
(22) Date of filing: 28.06.2022
(51) Int. Cl.: B29B 17/02, B29B 17/04, B29K 105/08

(54) **METHOD AND APPARATUS FOR DETACHING A FIBER LAYER FROM A MULTILAYER FIBER COMPOSITE MATERIAL**
VERFAHREN UND VORRICHTUNG ZUM ABLÖSEN EINER FASERSCHICHT VON EINEM MEHRSCHICHTIGEN FASERVERBUNDWERKSTOFFMATERIAL
PROCÉDÉ ET APPAREIL POUR DÉTACHER UNE COUCHE DE FIBRES À PARTIR D'UN MATÉRIAU COMPOSITE DE FIBRES MULTICOUCHE

(43) Date of publication of application: 03.01.2024
(73) Proprietor: Fraunhofer-Gesellschaft zur Förderung der angewandten Forschung e.V., 80686 München (DE)
(72) Inventor: IMBERT, Mathieu, 79104 Freiburg (DE); LÜCK, Martin, 79104 Freiburg (DE)
(74) Representative: 2SPL Patentanwälte PartG mbB

(56) References cited:
- EP-A1- 3 124 528
- EP-B1- 2 152 487
- WO-A1-2018/050926
- CN-A- 106 079 436
- DE-A1- 102013 200 482
- JP-A- 2011 122 032
- US-A1- 2019 099 921
- US-A1- 2019 136 414

## Description

### Field

The present disclosure relates to a method and an apparatus for detaching a fiber layer from a multilayer fiber composite material.

### Background

Fiber composite materials may be difficult to recycle due to their heterogeneous fiber structure.

WO 2018/050926 A1 suggests a method and a device for recycling a thermoplastic fibre reinforced composite material, which is in at least one deposition layer in a component, it is suggested that said fibre-reinforced composite material should be pulled off from the remaining component, in the direction of a main fibre direction, in at least one pull-off layer comprising fibres and matrix material.

CN 106 079 436 A suggests a method for 3D printing continuous fiber reinforced composite materials and a reproducing method, comprising the following steps: 1) by the 3D printing continuous fiber reinforced composite materials retracting device composite material presoaked silk 16 of recovery; and 2) remanufacture device by 3D printing continuous fiber reinforced composite materials to realize remanufacturing process.

US 2019/136414 A1 suggests a method for regenerating reinforced fiber includes binding a part of a composite member containing reinforcing fibers and resins oriented in directions different from each other along a direction intersecting a longitudinal direction of the composite member; removing the resins from the composite member; and separating unbound reinforced fibers from bound reinforced fibers among the reinforced fibers.

EP 3 124 528 A1 suggests waste treatment and recycling of a carbon fiber reinforced plastic and a glass fiber-reinforced plastic are difficult owing to their excellent characteristics. The technique has been completed on the basis of the finding that a reinforcing material can be recovered with high efficiency by bringing heated titanium oxide granules into contact with a reinforced plastic.

DE 10 2013 200482 A1 suggests a method for processing fiber-reinforced plastics (FRPs), in particular one in which the reinforcing fibers can be recovered as raw material. According to the proposed technique, FRPs are reacted in an aqueous environment with an increase in pressure, the polymer matrix dissolving and the reinforcing fibers being recovered with the quality of new goods without any noticeable damage.

JP 2011 122032 A suggests an apparatus for recovering carbon fibers which has an introduction part for introducing steam, a heater section for heating the steam at 800°C or higher to form superheated steam, and a holding section for holding a substance to be treated which contains CFRP and by treating the substance to be treated with the superheated steam, the plastic in CFRP is removed to recover carbon fibers. The method for recovering carbon fibers comprises treating a substance to be treated which contains CFRP with superheated steam of 800°C or higher to remove the plastic in the CFRP to recover carbon fibers.

US 2019/099921 A1 suggests a carbon fiber recovery method for recovering carbon fibers from a fiber reinforced plastic member having a carbon fiber reinforced plastic (CFRP) layer on which a glass fiber reinforced plastic (GFRP) layer is formed is provided. The method includes: forming a cut that penetrates through the GFRP layer and reaches the CFRP layer in the fiber reinforced plastic member, causing a heated phosphorus-containing solution to penetrate from the cut and separating the CFRP layer from the GFRP layer in the vicinity of an interface between the CFRP layer and the GFRP layer, and dissolving, by a resin solution, a resin part of the CFRP layer from which the GFRP layer has been removed and then recovering the remaining carbon fibers.

EP 2 152 487 B1 suggests A method of recycling composite material comprising carbon fibres and a resin, the method comprising: providing a furnace comprising at least a heating portion; providing a transporter for transporting the composite material through the furnace (1: 100); loading the composite material on the transporter and transporting the composite material through the furnace; and removing resin from the composite material, as it travels through the heating portion of the furnace on the transporter, by means of chemical decomposition at a first temperature, with the resultant generation of fumes. The method comprises detecting a percentage of oxygen in an atmosphere in the heating portion when the composite material has entered this portion; with the generated fumes being removed from the heating portion in a controlled manner, such that the percentage of oxygen in the atmosphere in the heating portion is controlled.

Conventionally, fiber composite materials may be shredded, crushed or fragmented to simplify the recycling. However, this may cause a loss of the valuable fiber structure and, thus, a "down-cycling" of the materials. Hence, there may be a demand for an improved reprocessing of fiber composite materials.

### Summary

The present invention is defined by the method according to claim 1, and the apparatus according to claim 12.

According to a first aspect, the present disclosure provides a method for detaching a fiber layer from a multilayer fiber composite material. The fiber layer is one of a plurality of fiber layers of the fiber composite material. The plurality of fiber layers are embedded in a matrix material of the fiber composite material. The method comprises heating at least a portion of the matrix material to a temperature above a vaporization temperature of the matrix material or above a decomposition temperature of the matrix material to at least partially remove the matrix material from at least a portion of the fiber layer. The method further comprises mechanically detaching the at least partially matrix-free portion of the fiber layer from the remaining fiber composite material. The heating of the portion of the matrix material is executed at least partially simultaneously with the detaching of the portion of the fiber layer from the remaining fiber composite material.

According to a second aspect, the present disclosure provides an apparatus for detaching a fiber layer from a multilayer fiber composite material. The fiber layer is one of a plurality of fiber layers of the fiber composite material. The plurality of fiber layers are embedded in a matrix material of the fiber composite material. The apparatus comprises a heating device configured to heat at least a portion of the matrix material to a temperature above a vaporization temperature of the matrix material or above a decomposition temperature of the matrix material to at least partially remove the matrix material from at least a portion of the fiber layer. The apparatus further comprises a detachment device configured to mechanically detach the at least partially matrix-free portion of the fiber layer from the remaining fiber composite material. The heating device and the detachment device are configured to, at least partially simultaneously, heat the portion of the matrix material and detach the portion of the fiber layer from the remaining fiber composite material.

### Brief description of the Figures

Some examples of apparatuses and/or methods will be described in the following by way of example only, and with reference to the accompanying figures, in which
Fig. 1 illustrates an example of an apparatus for detaching a fiber layer from a multilayer fiber composite material;
Fig. 2 illustrates an example of an analysis device;
Fig. 3a and 3b illustrate an example of a cutting device and a heating device;
Fig. 4a and 4b illustrate an example of a heating device;
Fig. 5 illustrates an example of a cutting device; and
Fig. 6 illustrates a flowchart of an example of a method for detaching a fiber layer from a multilayer fiber composite material.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

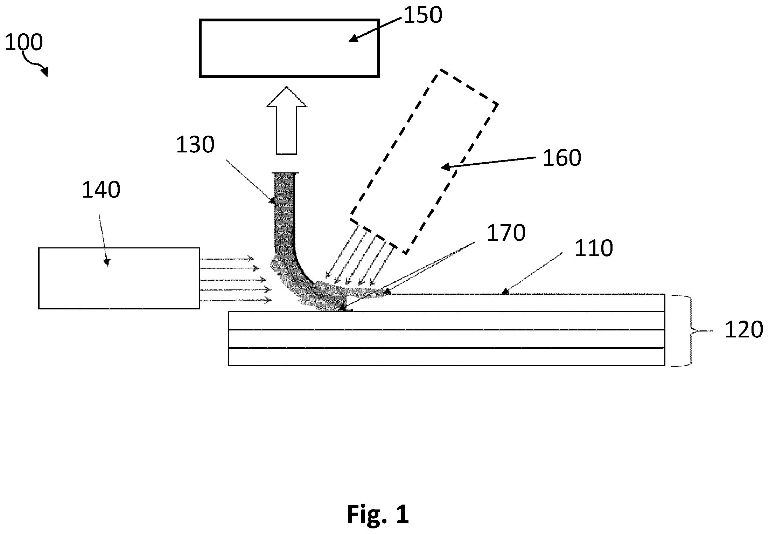

Fig. 1 illustrates an example of an apparatus 100 for detaching a fiber layer 110 from a multilayer fiber composite material 120. Detaching the fiber layer 110 may be useful, e.g., for recycling, repair or inspection of the fiber composite material 120.

The fiber composite material 120 is a compound, multiphase and/or mixed material which comprises two main components: fibers which are arranged in a plurality of fiber layers and a bedding matrix material (not shown in Fig. 1). Mutual interactions between the two involved components may mechanically reinforce the resulting fiber composite material 120.

Depending on the desired reinforcement of the fiber composite material 120, it may be provided with endless or continuous fibers. The fibers may be of any material or type. For instance, the fibers may be of a material that has a higher vaporization or decomposition temperature than the matrix material. The fibers may be of, e.g., aramid, carbon, glass or ceramic.

To achieve high-quality materials for use in mechanically demanding environments, the fibers may be oriented along a predefined direction within their layer (fiber orientation), e.g., along stress and strain field vectors expected for a certain application such as the main load direction. Such fiber layers with orientated fibers may be laminates of the fiber composite material 120. The fiber orientation may be substantially equal or may differ from fiber layer to fiber layer. Composites such as the fiber composite material 120 may be used in lightweight applications, e.g., aerospace, wind turbines, or automotive.

An objective of the techniques described herein may be to detach the fiber layer 110 and remove its matrix material in a fiber-preserving way, i.e., maintaining the length and orientation of the fibers. On the contrary, conventional recycling methods may include a size-reducing stage such as shredding or be based on purely thermal or thermo-chemical methods, leading to a loss of fiber length or orientation and, thus, to a loss of the desired mechanical properties and economic value of the fibers.

Fig. 1 shows a cross section of the fiber composite material 120 revealing its stacked fiber layers which extend horizontally. The fiber layers may be formed by fiber reinforcements extending along a plane perpendicular to the cross section shown in Fig. 1. By way of example, the fiber composite material 120 is illustrated in Fig. 1 as elongated, flat and even piece. In other examples of the present disclosure, the fiber composite material 120 may exhibit a different shape than the one shown in Fig. 1, e.g., a rounded shape. The apparatus 100 may accordingly be configured to process a predefined shape or any shape of materials.

On the right-hand side of the fiber composite material 120 illustrated in Fig. 1, the fiber composite material 120 is shown in its original state, i.e., before the detaching process executed by the apparatus 100. Thus, in the said region of the fiber composite material 120, the fiber layers are stacked and bound (attached to each other) by the matrix material. On the left-hand side of the fiber composite material 120 illustrated in Fig. 1, the fiber layer 110 is partially detached by the apparatus 100 starting from the very left of the fiber composite material 120 and yielding an at least partially matrix-free, detached portion 130 of the fiber layer 110. In some examples, the detached portion 130 may be substantially or completely matrix-free.

It is to be noted that the direction and starting point of detachment indicated by Fig. 1 is meant for illustration purposes. In other examples than the one shown in Fig. 1, the detachment may start from a different part of the fiber composite material 120, e.g., from a middle part of the fiber composite material 120. In other examples, the detachment may continue in a different detaching direction than the one shown in Fig. 1 or in several different directions, e.g., starting from a middle part of the fiber composite material 120 and continuing simultaneously to the left and the right. Furthermore, a force for detaching the fiber layer 110 is indicated in Fig. 1 as an arrow pointing upwards starting from the left end of the fiber layer 110. Likewise, a force with a different direction or point of application may be within the meaning of the present disclosure, e.g., the force may be applied from the left side or a middle part of the fiber layer 110, the force may be applied from between the fiber layer 110 and the adjacent fiber layer below (lifting the fiber layer 110 up) or the force may be applied at a certain angle (e.g., 45 degree) to the fiber layer 110.

The fiber layer 110 which is to be detached is one of the plurality of fiber layers of the fiber composite material 120. For illustration purposes, the fiber layers are indicated as four layers in Fig. 1. It is to be noted that a fiber composite material discussed herein may exhibit any number n ≥ 2 of fiber layers. In Fig.1, the fiber layer 110 is the topmost layer of the fiber composite material 120. In other examples of the present disclosure, the fiber layer 110 may be the bottom layer of the fiber composite material 120, e.g., attached to a deposition layer or surface of a component, or an intermediate layer of the fiber composite material 120. Accordingly, the apparatus 100 may be configured to detach the fiber layer 110 from its adjacent fiber layer above or below or from several adjacent layers.

The apparatus 100 comprises a heating device 140 and a detachment device 150. The heating device 140 is configured to heat at least a portion of the matrix material to at least partially remove the matrix material from at least a portion of the fiber layer 110. The detachment device 150 is configured to detach the at least partially matrix-free portion of the fiber layer 110 from the remaining fiber composite material 120, yielding the at least partially matrix-free, detached portion 130 of the fiber layer 110. The portion of the fiber layer 120 may be, e.g., the entire fiber layer 120 or a tape, strip or thread of the fiber layer 120.

As mentioned above, the plurality of fiber layers are embedded in the matrix material. For instance, the matrix material may serve as filler or adhesive between the fibers and fiber layers, protect the fibers from environmental impacts or give the fiber composite material 120 its shape. The matrix material may be of any type, such as polymer, vitrimer, or alike. In some examples, the matrix material comprises at least one of a thermoset, a thermoplastic and a vitrimer material. Conventional recycling techniques for fiber composite materials may have difficulties to process thermoset materials in a fiber-preserving way since they are irreversibly hardened during fabrication. In contrast, the apparatus 100 may be capable of regaining fiber layers of thermoset materials without destroying the valuable length and arrangement of the fibers. Note that fiber-matrix separation - as provided by the techniques described herein - may also be of interest for thermoplastic materials which may be, e.g., degraded and need replacement. The technique of the present disclosure may further be applicable for several different material types, e.g., for thermoset as well as thermoplastic materials. This potentially versatile use of the apparatus 100 may, for instance, simplify the recycling procedure for fiber composite materials.

The heating device 140 may heat the portion of the matrix material by means of at least one of laser radiation, infrared radiation, microwave radiation, induction and hot air. In Fig. 1, the heating device 140 is oriented towards a region between the fiber layer 110 and the remaining fiber composite material 120. In Fig. 1, the heating device 140 is configured to heat the portion of the matrix material by heating a detachment region 170 at which the portion of the fiber layer 110 is detached from the remaining fiber composite material 120. In other examples, the heating device 140 may have a different orientation than the one shown in Fig. 1: For example, the heating device 140 may be oriented towards an upper surface of the fiber layer 110 and may be configured to heat at least the portion of the matrix material on the upper surface. In the latter case, the matrix material on the upper surface may be removed, and the heat may additionally conduct to a portion of the matrix material in an intermediate region between the fiber layer 110 and, e.g., one or more subsequent fiber layers, thus, removing the matrix material in the intermediate region. This may be advantageous for simultaneously detaching the overlying matrix material as well as the matrix material in the intermediate region in an energy- and time-saving manner.

The apparatus 100 is configured to heat the portion of the matrix material at least partially simultaneously with detaching the portion of the fiber layer 110 from the remaining fiber composite material 120. This may be a very energy efficient way for applying heat to the matrix material and supporting the detachment process.

For instance, the heating device 140 may continuously heat (or irradiate) the detachment region 170 by means of an intensive heating source causing the fiber-matrix separation. Therefore, while or (shortly) after detaching the portion of the fiber layer 110, the heating device 140 may be moved relative to the fiber composite material 120 or be reorientated such that the distance and orientation of the heating device 140 relative to the detachment region 170 is adapted to the continuing detaching process. For instance, the apparatus 100 may comprise a control circuit configured to control the movement of the heating device 140 relative to the fiber composite material 120 based on the distance and orientation of the heating device 140 relative to the detachment region 170. Alternatively or additionally, the control circuit may control the movement based on a measured temperature of the heated portion of the matrix material.

Optionally, the apparatus 100 may comprise an additional heating device 160 configured to heat at least another portion of the matrix material to at least partially remove the matrix material from at least another portion of the fiber layer 110. In Fig. 1, the additional heating device 160 heats the fiber layer 110 from above, thus, removing the matrix at least partially from the opposite side of the detachment region 170. In other examples, the heat may be applied to the matrix material from several different angles relative to the fiber layer, resulting in a more uniform temperature distribution over the matrix material at the detachment region 170. This may support the removal of the matrix from the fiber layer 110.

In some examples, the heating device 140 may be configured to heat the portion of the matrix material to a temperature above a vaporization temperature of the matrix material or above a decomposition temperature of the matrix material. This may lead to a removal of the matrix material by, e.g., vaporizing or thermally degrading the matrix material. In some examples, the apparatus 100 may be configured to introduce a controlled gas flow or suction to the detachment region to remove soot particles caused by the heating of the matrix material. This may prevent an introduction of impurities in the recovered portion of the fiber layer 110.

The apparatus 100 may be configured to, prior to heating the portion of the matrix material, determine the vaporization temperature or the decomposition temperature of the matrix material based on at least one of a nondestructive and a destructive material analysis of the matrix material. The destructive material analysis may be a small-scale destructive material analysis method which only negligibly affects the fiber composite material 120 by, e.g., taking only a small material sample. The apparatus 100 may, therefore, operate independent of information about the matrix material provided by a manufacturer of the fiber composite material 120.

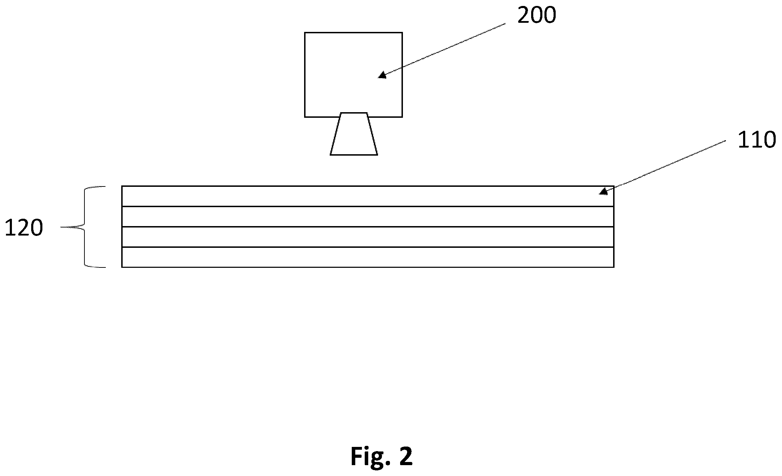

For example, the apparatus 100 may comprise an analysis device. An example of such an analysis device 200 is illustrated in **Fig. 2****.** The analysis device 200 may be configured to determine a type of the matrix material, e.g., based on Fourier transform infrared spectroscopy. Additionally or alternatively, the analysis device 200 may be configured to analyze the fiber material, e.g., based on polarization imaging to distinguish between glass and carbon fibers. Additionally or alternatively, the analysis device 200 may be configured to determine the (main) fiber orientation of the fiber layer 110, e.g., based on optical edge or orientation detection by means of image analysis (for instance, by using polarization imaging or triangulation measurements). Additionally or alternatively, the analysis device may be configured to determine a shape or arrangement of the fiber composite material 120, e.g., to identify a suitable starting point for detaching the fiber layer 110 (for instance, an end of the fiber layer), for example, using triangulation measurements.

The material analysis device 200 may provide analysis data, e.g., using methods supported by artificial intelligence and based on image databases. The data may be used to control the heating and/or detachment process. For instance, the data may be sent to a control circuit of the apparatus 100 which controls the heating device 140 and the detachment device 150.

The detachment device 150 may be configured to mechanically detach the portion of the fiber layer 110 from the remaining fiber composite material 120. The detachment device 150 may be configured to apply the above-mentioned force on the portion of the fiber layer 110 by means of, e.g., a gripper, a lifting device and/or an adhesive surface attached to the fiber layer 110. A control circuit of the apparatus 100 may control the force applied by the detachment device 150, a movement of the detachment device 150 and a movement of the heating device 140 relative to the fiber composite material 120 such that detaching of the fiber layer 110 and the removal of the matrix material are aligned, e.g., such that the fiber layer 110 is detached as far as the matrix material is removed. For instance, the detachment progress may be monitored, e.g., based on a non-destructive method for height measurement (e.g., triangulation measurement, interferometry or alike). Optionally, the progress of the matrix-removal may be monitored, as well, e.g., based on infrared imaging of the thermal process. The control circuit may control the detachment device 150 based on the monitored progress.

In some examples, the detachment device 150 may detach the portion of the fiber layer 110 from the remaining fiber composite material 120 by peeling off the portion of the fiber layer 110 from the remaining fiber composite material 120. For instance, the detachment device 150 may peel off the portion of the fiber layer 110 along the fiber orientation of the fiber layer 110. This may prevent destruction or reduce damage of the fibers. Prior to peeling off the portion of the fiber layer 110, the apparatus 100 may, therefore, determine the fiber orientation, e.g., based on a nondestructive material analysis of the fiber composite material 120.

For instance, the detachment device 150 may further be configured to, firstly, lift an end of the fiber layer 110 and then peel off the fiber layer 110 from the remaining fiber composite material 120 starting from the lifted end of the fiber layer 110. The detachment device 150 may, therefore, connectto the end of the fiber layer 110, e.g., positively, non-positively and/or materially. A positive or material connection may be advantageous since less tension or clamping forces may be applied to the end of the fiber layer 110. For instance, the detachment device 150 may be configured to lift the end of the fiber layer 110 by gripping the end of the fiber layer or by adhering to the end of the fiber layer 110. Then, the detachment device 150 may be moved relative to the fiber composite material 120 to detach the portion of the fiber layer 110, e.g., while the matrix material is simultaneously removed.

In some examples, the apparatus 100 may comprise a collection device configured to collect the detached portion 130 of the fiber layer 110. For instance, the collection device may comprise a spool onto which the detached portion 130 may be rolled up.

The apparatus 100 may continue the heating and detaching process until the fiber layer 110 is completely detached. Alternatively, the apparatus 100 may detach the fiber layer 110 only partially. For instance, the apparatus 100 may comprise a cutting device configured to cut off the detached portion 130 of the fiber layer 110, e.g., with a laser. This may support interrupting the detachment in case of repair, for instance. The apparatus 100 may be further configured to detach a further fiber layer of the plurality of fiber layers, e.g., during the detachment of the fiber layer 110 or after completely detaching the fiber layer 110. For instance, the apparatus 100 may repeat the above-mentioned steps until several or all fiber layers of the plurality of fiber layers are recovered.

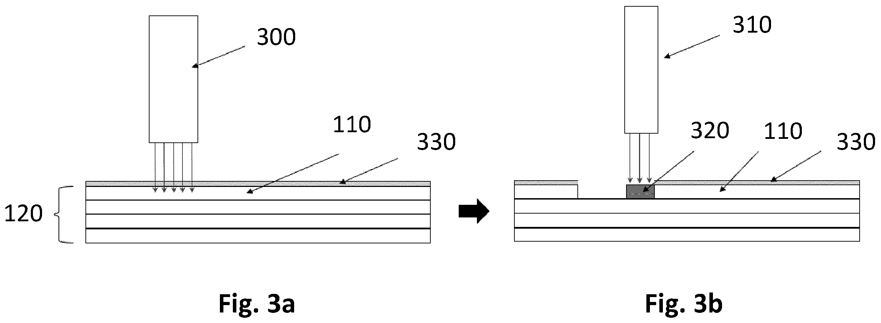

In some examples, the apparatus 100 may comprise an optical system configured to, prior to lifting the end of the fiber layer 110, determine whether an end of the fiber layer 110 is optically detectable. The apparatus 100 may comprise a cutting device. **Fig. 3a and 3b** illustrate an example of such a cutting device 300 for generating an end of the fiber layer 110. The cutting device 300 is configured to, if it is determined that an end of the fiber layer 110 is not optically detectable, cut into the fiber layer 110 to generate the end of the fiber layer 110. This may be beneficial in cases where the end is hardly detectable, e.g., due to the form or layering of the fiber composite material 120. The cutting device may be a laser source, for instance. It may create a cut in the fiber layer 110 (see Fig. 3a), which may, then, be treated as the end of the fiber layer 110. The end of the fiber layer 120 may then be heated by a heating device 310 (see Fig. 3b) to partially remove the matrix material from the end, yielding an at least partially matrix-free end 320 of the fiber layer 110. The heating device 310 may be the heating device 140, for instance. In Fig. 3a and 3b the fiber layer 110 is coated by a coating layer 330. This coating layer 330 may be removed, for example, with the heating device 140, prior to detaching the fiber layer 110.

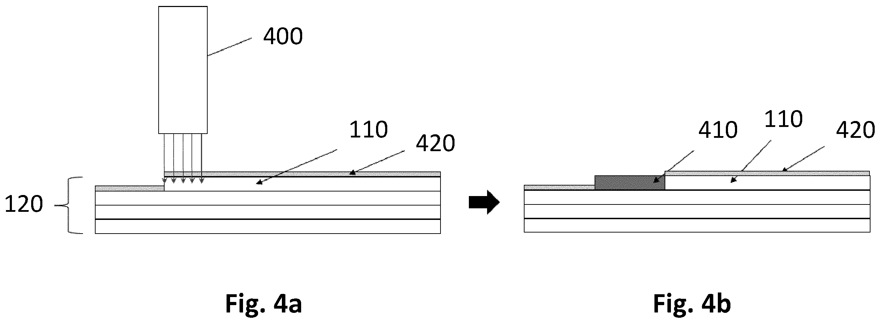

**Fig. 4a and 4b** illustrate an example of a heating device 400 for preparing an end of the fiber layer 110. The heating device 400 may be the heating device 140, for instance. If an end of the fiber layer 110 is detected or generated, the heating device 400 may be configured to, prior to lifting the end of the fiber layer 110, heat the matrix material at least at the end of the fiber layer 110 (see Fig. 4a) to remove the matrix material at the end. This may yield an at least partially matrix-free end 410 of the fiber layer 110 (see Fig. 4b). Thus, the end of the fiber layer 110 is exposed and prepared for detachment. A coating layer 420 of the fiber layer 110 may be removed at this stage, as well.

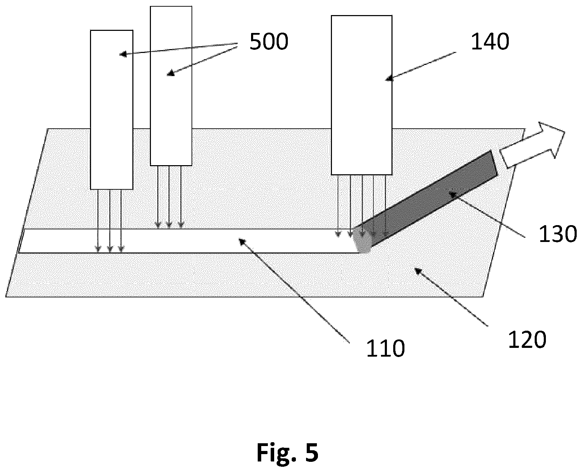

In some examples, the apparatus 100 may further comprise a cutting device configured to, while peeling off the portion of the fiber layer 110 from the remaining fiber composite material 120, cut the fiber layer 110 laterally along a peeling direction (e.g., the fiber orientation) in which the portion of the fiber layer 110 is peeled off. **Fig. 5** illustrates an example of a cutting device 500 used for the latter purpose. The cutting device 500 may be, e.g., a laser, a sharp blade, an ultrasonic cutting system or alike. In Fig. 5, the cutting device 500 comprises two cutting units which are moved along two parallel lines on the overlying fiber mat of the fiber composite material 120 to generate a strip, yielding the portion of the fiber layer 110 to be detached.

In some examples, the fiber composite material 120 is attached to a surface of a component. Then, the apparatus 100 may further comprise a lifting device configured to lift at least a portion of the fiber composite material 120 from the surface of the component while detaching the portion of the fiber layer 110 from the remaining fiber composite material 120. This may simplify the detachment of the fiber layer 110. For instance, the lifting device may be configured to lift the portion of the fiber composite material 120 by introducing an air flow between the fiber composite material 120 and the surface of the component.

In some examples, the apparatus 100 may comprise a device configured to remove dioxygen from a surrounding of the portion of the fiber layer 110. For instance, the apparatus 100 may comprise a vacuum device (such as a pump) configured to remove the dioxygen. Alternatively, the apparatus 100 may comprise a gas supply device configured to introduce an inert gas (e.g., argon or nitrogen) to the surrounding of the portion of the fiber layer 110 for displacing the dioxygen. The dioxygen may be removed at least near the heated portion of the matrix material. The apparatus 100 may be configured to heat the portion of the matrix material and/or detach the at least partially matrix-free portion of the fiber layer 110 from the remaining fiber composite material 120 when the dioxygen is removed from the surrounding. The removal of dioxygen may prevent oxidation of the matrix material or the fibers.

In some examples, the quality of the recovered material may be quantified by analyzing matrix residues or soot, e.g., based on a non-destructive analysis such as continuous microscopic imaging of separated fiber layers. A control circuit of the apparatus 100 may control or adjust detachment or heating parameters automatically based on the quantified quality.

The apparatus 100 may further comprise a sizing device configured to apply a sizing (in-situ) to the detached portion 130 of the fiber layer 110, yielding a coating layer on the detached portion 130. This may allow for a better fiber-matrix adhesion in a further processing of the fiber.

In summary, the apparatus 100 may provide a combined fiber-matrix separation and fiber layer (reinforcement) recovery.

Conventional recycling methods for fiber composite materials may be purely based on thermal and chemical treatments such as pyrolysis, fluidized bed, solvolysis. In pyrolysis and fluidized bed, the fiber-matrix separation may be realized by vaporizing or burning the matrix. In solvolysis, the fiber-matrix separation may be realized using solvents. These conventional methods may cause a reduction of the strength of the fibers and of an average molecular weight of the matrix. The fibers may lose their orientation during the process and may, therefore, need a realignment afterwards. The use of solvents may decrease the post-treatment possibilities of the recovered fiber layers.

By contrast, the apparatus 100 may enable a reprocessing of the fiber composite material 120 in a fiber-preserving way, i.e., the length and orientation of the fibers may be substantially maintained or affected in a controlled manner, e.g., shortened to a desired length. The quality of the fibers may, hence, be maintained and sufficient for direct reuse. Therefore, the apparatus 100 may preserve the mechanical properties of the fibers. This may lead to energy and economic savings in the subsequent processing of the recyclate, e.g., when reusing the recovered portions of fiber layers for fabrication of new components or new fiber composite materials. Due to the removal of the matrix material, the apparatus 100 may enable a re-embedding of the (portions of) fiber layers into a new matrix material which is possibly of a different type. This may be beneficial in cases where the matrix material is degraded and needs replacement for a further use or where a new application with different mechanical requirements is envisaged for the fibers. The apparatus 100 may further enable a recovery of large parts of the fiber layer or even the entire fiber layer.

The use of fiber composite materials may be of special relevance for the manufacture of pressure tanks and pipes. Such tanks and pipes may be made by winding carbon fibers impregnated with resin, thus, the fibers run continuously around the component. The apparatus 100 may be particularly advantageous for the latter since the continuous fibers may be substantially recovered in their entire length. The recovery of large area fiber layers - as provided by the apparatus 100 - may also be of interest for large components such as aircraft parts or automotive parts.

The development of the hydrogen industry and the increasing use of hydrogen as fuel for cars and trucks, may depend on the use of wounded carbon fiber-reinforced containers due to the light weight of their construction. Accordingly, recycling methods may be necessary to recycle the numerous containers - to increase resource efficiency and comply to regulations regarding end-of-life of products. In such a context, the techniques disclosed herein, e.g., as represented by the apparatus 100, may offer a promising solution to recover high-quality re-cyclates. The techniques may be particularly relevant for carbon fibers since these fibers are produced at high temperatures in an energy and usually carbon dioxide intensive process. This high energy consumption is reflected in the price of the fiber. The techniques disclosed herein may both save energy costs of new fibers and enable the production of high quality products from recovered fibers.

Conventional recycling methods may recover carbon fibers based on pyrolysis. The techniques disclosed herein may result in a higher length of the recovered carbon fibers than the conventional methods. The techniques may, therefore, be relevant for the portfolio of recycling companies.

Furthermore, the apparatus 100 may enable repair of the fiber composite material 120. If, for example, only one or few fiber layers are affected by damage or degradation, they may be detached and replaced.

Besides, the apparatus 100 may allow an inspection of intermediate layers of the fiber composite material 120. The apparatus 100 may, for instance, only detach a small part of the fiber layer overlying on the surface of the fiber composite material 120. The exposed region of the fiber composite material 120 may be used for material analysis, for instance.

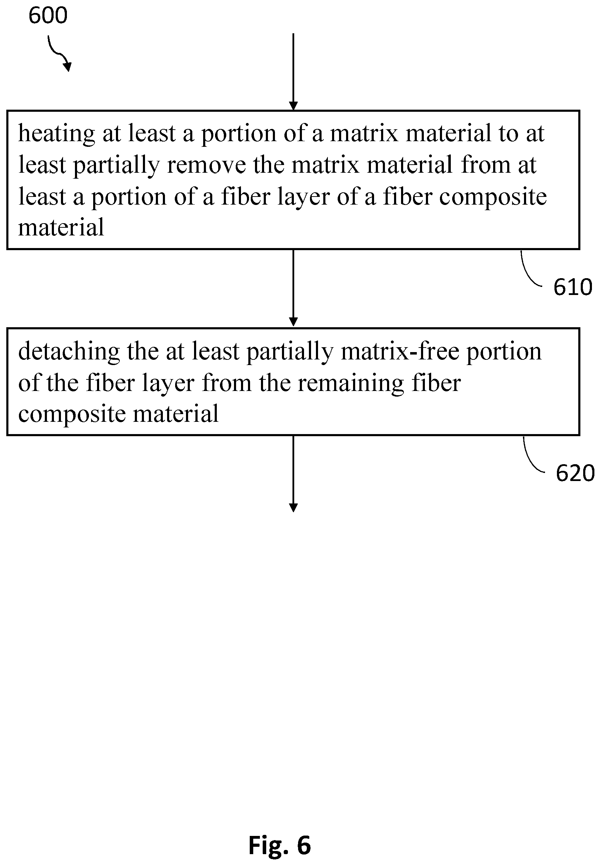

**Fig. 6** illustrates a flowchart of an example of a method 600 for detaching a fiber layer from a multilayer fiber composite material. The fiber layer is one of a plurality of fiber layers of the fiber composite material. The plurality of fiber layers are embedded in a matrix material of the fiber composite material. The method comprises heating 610 at least a portion of the matrix material above a vaporization temperature of the matrix material or above a decomposition temperature of the matrix material to at least partially remove the matrix material from at least a portion of the fiber layer. The method further comprises mechanically detaching 620 the at least partially matrix-free portion of the fiber layer from the remaining fiber composite material. The heating of the portion of the matrix material is executed at least partially simultaneously with the detaching of the portion of the fiber layer from the remaining fiber composite material.

More details and aspects of the method 600 are explained in connection with the proposed technique or one or more examples described above, e.g., with reference to Fig. 1. The method 600 may comprise one or more additional optional features corresponding to one or more aspects of the proposed technique, or one or more examples described above.

The method 600 may enable a reprocessing of the fiber composite material in a fiber-preserving way.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (600) for detaching a fiber layer (110) from a multilayer fiber composite material (120), wherein the fiber layer (110) is one of a plurality of fiber layers of the fiber composite material (120), wherein the plurality of fiber layers are embedded in a matrix material of the fiber composite material (120), comprising:
heating (610) at least a portion of the matrix material to a temperature above a vaporization temperature of the matrix material or above a decomposition temperature of the matrix material to at least partially remove the matrix material from at least a portion of the fiber layer (110); and
mechanically detaching (620) the at least partially matrix-free portion of the fiber layer (110) from the remaining fiber composite material (120), wherein the heating (610) of the portion of the matrix material is executed at least partially simultaneously with the detaching (620) of the portion of the fiber layer (110) from the remaining fiber composite material (120).

2. The method (600) of claim 1, wherein the matrix material comprises at least one of a thermoset, a thermoplastic and a vitrimer material.

3. The method (600) of any one of the previous claims, wherein heating (610) the portion of the matrix material comprises heating a detachment region (170) at which the portion of the fiber layer (110) is detached from the remaining fiber composite material (120).

4. The method (600) of any one of the previous claims, further comprising:
prior to heating (610) the portion of the matrix material, determining the vaporization temperature or the decomposition temperature of the matrix material based on at least one of a nondestructive and a destructive material analysis of the matrix material.

5. The method (600) of any one of the previous claims, wherein the portion of the matrix material is heated by means of at least one of laser radiation, infrared radiation, microwave radiation, induction and hot air.

6. The method (600) of any one of the previous claims, wherein detaching (620) the portion of the fiber layer (110) from the remaining fiber composite material (120) comprises peeling off the portion of the fiber layer (110) from the remaining fiber composite material (120).

7. The method (600) of claim 6, further comprising:
lifting an end (320, 410) of the fiber layer (110), wherein the fiber layer (110) is peeled off from the remaining fiber composite material (120) starting from the lifted end (320, 410) of the fiber layer (110).

8. The method (600) of claim 7, wherein lifting the end (320, 410) of the fiber layer (110) comprises connecting positively, non-positively and/or materially the end (320, 410) of the fiber layer with a detachment device (150) for lifting the end (320, 410) of the fiber layer (110).

9. The method (600) of any one of claims 7 or 8, further comprising:
prior to lifting the end (320, 410) of the fiber layer (110), heating the matrix material at least at the end (320, 410) of the fiber layer (110) to remove the matrix material from at least the end (320, 410) of the fiber layer (110).

10. The method (600) of any one of claims 7 to 9, further comprising, prior to lifting the end (320, 410) of the fiber layer (110):
determining whether an end of the fiber layer (110) is optically detectable; and
if it is determined that an end of the fiber layer (110) is not optically detectable, cutting into the fiber layer (110) to generate the end (320, 410) of the fiber layer (110).

11. The method (600) of any one of the previous claims, further comprising:
removing dioxygen from a surrounding of the portion of the fiber layer (110), wherein at least one of heating (610) the portion of the matrix material and detaching (620) the at least partially matrix-free portion of the fiber layer (110) from the remaining fiber composite material (120) is executed when the dioxygen is removed from the surrounding.

12. An apparatus (100) for detaching a fiber layer (110) from a multilayer fiber composite material (120), wherein the fiber layer (110) is one of a plurality of fiber layers of the fiber composite material (120), wherein the plurality of fiber layers are embedded in a matrix material of the fiber composite material (120), comprising:
a heating device (140) configured to heat at least a portion of the matrix material to a temperature above a vaporization temperature of the matrix material or above a decomposition temperature of the matrix material to at least partially remove the matrix material from at least a portion of the fiber layer (110); and
a detachment device (150) configured to mechanically detach the at least partially matrix-free portion of the fiber layer (110) from the remaining fiber composite material (120), wherein the heating device (140) and the detachment device (150) are configured to, at least partially simultaneously, heat the portion of the matrix material and detach the portion of the fiber layer (110) from the remaining fiber composite material (120).

## Patentansprüche

1. Ein Verfahren (600) zum Ablösen einer Faserschicht (110) von einem mehrschichtigen Faserverbundmaterial (120), wobei die Faserschicht (110) eine von einer Mehrzahl von Faserschichten des Faserverbundmaterials (120) ist, wobei die Mehrzahl von Faserschichten in einem Matrixmaterial des Faserverbundmaterials (120) eingebettet ist, umfassend:
Erwärmen (610) zumindest eines Abschnitts des Matrixmaterials auf eine Temperatur oberhalb einer Verdampfungstemperatur des Matrixmaterials oder oberhalb einer Zersetzungstemperatur des Matrixmaterials, um das Matrixmaterial zumindest teilweise von zumindest einem Abschnitt der Faserschicht (110) zu entfernen; und
mechanisches Ablösen (620) des zumindest teilweise matrixfreien Abschnitts der Faserschicht (110) von dem verbleibenden Faserverbundmaterial (120), wobei das Erwärmen (610) des Abschnitts des Matrixmaterials zumindest teilweise gleichzeitig mit dem Ablösen (620) des Abschnitts der Faserschicht (110) von dem verbleibenden Faserverbundmaterial (120) ausgeführt wird.

2. Das Verfahren (600) gemäß Anspruch 1, wobei das Matrixmaterial zumindest eines von einem Duroplast, einem Thermoplast und einem Vitrimermaterial umfasst.

3. Das Verfahren (600) gemäß einem der vorherigen Ansprüche, wobei das Erwärmen (610) des Abschnitts des Matrixmaterials ein Erwärmen einer Ablöseregion (170) umfasst, an der der Abschnitt der Faserschicht (110) von dem verbleibenden Faserverbundmaterial (120) abgelöst wird.

4. Das Verfahren (600) gemäß einem der vorherigen Ansprüche, ferner umfassend:
vor dem Erwärmen (610) des Abschnitts des Matrixmaterials, Bestimmen der Verdampfungstemperatur oder der Zersetzungstemperatur des Matrixmaterials basierend auf zumindest einem von einer zerstörungsfreien und einer zerstörenden Materialanalyse des Matrixmaterials.

5. Das Verfahren (600) gemäß einem der vorherigen Ansprüche, wobei der Abschnitt des Matrixmaterials mittels zumindest einem von Laserstrahlung, Infrarotstrahlung, Mikrowellenstrahlung, Induktion und Heißluft erwärmt wird.

6. Das Verfahren (600) gemäß einem der vorherigen Ansprüche, wobei das Ablösen (620) des Abschnitts der Faserschicht (110) von dem verbleibenden Faserverbundmaterial (120) ein Ablösen des Abschnitts der Faserschicht (110) von dem verbleibenden Faserverbundmaterial (120) umfasst.

7. Das Verfahren (600) gemäß Anspruch 6, ferner umfassend:
Anheben eines Endes (320, 410) der Faserschicht (110), wobei die Faserschicht (110) ausgehend von dem angehobenen Ende (320, 410) der Faserschicht (110) von dem verbleibenden Faserverbundmaterial (120) abgelöst wird.

8. Das Verfahren (600) gemäß Anspruch 7, wobei das Anheben des Endes (320, 410) der Faserschicht (110) ein formschlüssiges, kraftschlüssiges und/oder stoffschlüssiges Verbinden des Endes (320, 410) der Faserschicht mit einer Ablösevorrichtung (150) zum Anheben des Endes (320, 410) der Faserschicht (110) umfasst.

9. Das Verfahren (600) gemäß einem der Ansprüche 7 oder 8, ferner umfassend:
vor dem Anheben des Endes (320, 410) der Faserschicht (110), Erwärmen des Matrixmaterials zumindest an dem Ende (320, 410) der Faserschicht (110), um das Matrixmaterial von zumindest dem Ende (320, 410) der Faserschicht (110) zu entfernen.

10. Das Verfahren (600) gemäß einem der Ansprüche 7 bis 9, ferner umfassend, vor dem Anheben des Endes (320, 410) der Faserschicht (110):
Bestimmen, ob ein Ende der Faserschicht (110) optisch detektierbar ist; und
wenn bestimmt wird, dass ein Ende der Faserschicht (110) nicht optisch detektierbar ist, Schneiden in die Faserschicht (110), um das Ende (320, 410) der Faserschicht (110) zu erzeugen.

11. Das Verfahren (600) gemäß einem der vorherigen Ansprüche, ferner umfassend:
Entfernen von Disauerstoff aus einer Umgebung des Abschnitts der Faserschicht (110), wobei zumindest eines von Erwärmen (610) des Abschnitts des Matrixmaterials und Ablösen (620) des zumindest teilweise matrixfreien Abschnitts der Faserschicht (110) von dem verbleibenden Faserverbundmaterial (120) ausgeführt wird, wenn der Disauerstoff aus der Umgebung entfernt wird.

12. Eine Vorrichtung (100) zum Ablösen einer Faserschicht (110) von einem mehrschichtigen Faserverbundmaterial (120), wobei die Faserschicht (110) eine von einer Mehrzahl von Faserschichten des Faserverbundmaterials (120) ist, wobei die Mehrzahl von Faserschichten in einem Matrixmaterial des Faserverbundmaterials (120) eingebettet ist, umfassend:
eine Erwärmungsvorrichtung (140), die ausgebildet ist, um zumindest einen Abschnitt des Matrixmaterials auf eine Temperatur oberhalb einer Verdampfungstemperatur des Matrixmaterials oder oberhalb einer Zersetzungstemperatur des Matrixmaterials zu erwärmen, um das Matrixmaterial zumindest teilweise von zumindest einem Abschnitt der Faserschicht (110) zu entfernen; und
eine Ablösevorrichtung (150), die ausgebildet ist, um den zumindest teilweise matrixfreien Abschnitt der Faserschicht (110) von dem verbleibenden Faserverbundmaterial (120) mechanisch abzulösen, wobei die Erwärmungsvorrichtung (140) und die Ablösevorrichtung (150) ausgebildet sind, um zumindest teilweise gleichzeitig den Abschnitt des Matrixmaterials zu erwärmen und den Abschnitt der Faserschicht (110) von dem verbleibenden Faserverbundmaterial (120) abzulösen.

## Revendications

1. Procédé (600) pour détacher une couche de fibres (110) d'un matériau composite de fibres multicouches (120), dans lequel la couche de fibres (110) est l'une d'une pluralité de couches de fibres du matériau composite de fibres (120), dans lequel la pluralité de couches de fibres sont incorporées dans un matériau de matrice du matériau composite de fibres (120), comprenant le fait de :
chauffer (610) au moins une partie du matériau de matrice à une température supérieure à une température de vaporisation du matériau de matrice ou supérieure à une température de décomposition du matériau de matrice pour éliminer au moins partiellement le matériau de matrice d'au moins une partie de la couche de fibres (110) ; et
détacher mécaniquement (620) la partie au moins partiellement exempte de matrice de la couche de fibres (110) du matériau composite de fibres restant (120), dans lequel le fait de chauffer (610) la partie du matériau de matrice est exécuté au moins partiellement simultanément avec le fait de détacher (620) la partie de la couche de fibres (110) du matériau composite de fibres restant (120).

2. Procédé (600) selon la revendication 1, dans lequel le matériau de matrice comprend au moins l'un d'un matériau thermodurcissable, d'un matériau thermoplastique et d'un matériau vitrimère.

3. Procédé (600) selon l'une des revendications précédentes, dans lequel le fait de chauffer (610) la partie du matériau de matrice comprend le fait de chauffer une région de détachement (170) au niveau de laquelle la partie de la couche de fibres (110) est détachée du matériau composite de fibres restant (120).

4. Procédé (600) selon l'une des revendications précédentes, comprenant en outre :
avant le fait de chauffer (610) la partie du matériau de matrice, le fait de déterminer la température de vaporisation ou la température de décomposition du matériau de matrice sur la base d'au moins l'une d'une analyse de matériau non destructif et d'une analyse de matériau destructif du matériau de matrice.

5. Procédé (600) selon l'une des revendications précédentes, dans lequel la partie du matériau de matrice est chauffée au moyen d'au moins l'un d'un rayonnement laser, d'un rayonnement infrarouge, d'un rayonnement micro-ondes, d'une induction et d'un air chaud.

6. Procédé (600) selon l'une des revendications précédentes, dans lequel le fait de détacher (620) la partie de la couche de fibres (110) du matériau composite de fibres restant (120) comprend le fait de décoller la partie de la couche de fibres (110) du matériau composite de fibres restant (120).

7. Procédé (600) selon la revendication 6, comprenant en outre le fait de :
soulever une extrémité (320, 410) de la couche de fibres (110), dans lequel la couche de fibres (110) est décollée du matériau composite de fibres restant (120) à partir de l'extrémité soulevée (320, 410) de la couche de fibres (110).

8. Procédé (600) selon la revendication 7, dans lequel le fait de soulever l'extrémité (320, 410) de la couche de fibres (110) comprend le fait de relier par complémentarité de forme, par force et/ou de matière l'extrémité (320, 410) de la couche de fibres à un dispositif de détachement (150) pour soulever l'extrémité (320, 410) de la couche de fibres (110).

9. Procédé (600) selon l'une des revendications 7 ou 8, comprenant en outre :
avant le fait de soulever l'extrémité (320, 410) de la couche de fibres (110), le fait de chauffer le matériau de matrice au moins au niveau de l'extrémité (320, 410) de la couche de fibres (110) pour éliminer le matériau de matrice d'au moins l'extrémité (320, 410) de la couche de fibres (110).

10. Procédé (600) selon l'une des revendications 7 à 9, comprenant en outre, avant le fait de soulever l'extrémité (320, 410) de la couche de fibres (110) :
le fait de déterminer si une extrémité de la couche de fibres (110) est optiquement détectable ; et
s'il est déterminé qu'une extrémité de la couche de fibres (110) n'est pas optiquement détectable, le fait de découper dans la couche de fibres (110) pour générer l'extrémité (320, 410) de la couche de fibres (110).

11. Procédé (600) selon l'une des revendications précédentes, comprenant en outre le fait de :
éliminer le dioxygène d'un environnement de la partie de la couche de fibres (110), dans lequel au moins l'un parmi le fait de chauffer (610) la partie du matériau de matrice et le fait de détacher (620) la partie au moins partiellement exempte de matrice de la couche de fibres (110) du matériau composite de fibres restant (120) est exécuté lorsque le dioxygène est éliminé de l'environnement.

12. Appareil (100) pour détacher une couche de fibres (110) d'un matériau composite de fibres multicouches (120), dans lequel la couche de fibres (110) est l'une d'une pluralité de couches de fibres du matériau composite de fibres (120), dans lequel la pluralité de couches de fibres sont incorporées dans un matériau de matrice du matériau composite de fibres (120), comprenant :
un dispositif de chauffage (140) configuré pour chauffer au moins une partie du matériau de matrice à une température supérieure à une température de vaporisation du matériau de matrice ou supérieure à une température de décomposition du matériau de matrice pour éliminer au moins partiellement le matériau de matrice d'au moins une partie de la couche de fibres (110) ; et
un dispositif de détachement (150) configuré pour détacher mécaniquement la partie au moins partiellement exempte de matrice de la couche de fibres (110) du matériau composite de fibres restant (120), dans lequel le dispositif de chauffage (140) et le dispositif de détachement (150) sont configurés pour, au moins partiellement simultanément, chauffer la partie du matériau de matrice et détacher la partie de la couche de fibres (110) du matériau composite de fibres restant (120).
